# EUROPEAN PATENT SPECIFICATION

(11) **EP 3 571 449 B1**
(45) Date of publication and mention of the grant of the patent: **05.11.2025**
(21) Application number: 17751136.7
(22) Date of filing: 13.07.2017
(51) Int. Cl.: E04D 13/12, F24S 25/615, H02S 20/23

(54) **COVER ASSEMBLY**
ABDECKUNGSVORRICHTUNG
SYSTEME DE COUVERTURE

(30) Priority: 17.01.2017 IT 201700004592
(43) Date of publication of application: 27.11.2019
(73) Proprietor: Grondal S.r.l., 46043 Castiglione delle Stiviere (Mantova) (IT)
(72) Inventor: ENGHEBEN, Giuseppe, 46043 Castiglione delle Stiviere (Mantova) (IT)
(74) Representative: Chimini, Francesco
(86) International application number: PCT/IB2017/054248
(87) International publication number: WO 2018/134653

(56) References cited:
- EP-A2- 2 103 755
- CA-A1- 2 751 963
- DE-A1- 102010 041 161
- DE-U1- 202008 007 662
- GB-A- 2 462 490
- IT-A1- MO20 110 223
- US-A1- 2011 272 545

## Description

The present invention relates to a cover assembly comprising an anchoring bracket for covers particularly suitable for fixing structures on covers for the building industry, and an anchoring method.

As is well known, these days the installation of solar or photovoltaic plants for the generation of clean energy is becoming increasingly frequent. In addition, walkways or other installations such as machinery for air conditioning are required to be installed on industrial covers.

There are numerous fixing systems on the market for e.g. photovoltaic plants and various types of installations to be applied on industrial corrugated covers.

At present, the fixing systems are made up of guides that are fixed to the cover by means of screws, and then, on the guides, supports of various configurations are fastened on which the anchoring elements of the photovoltaic panels are ultimately installed.

Other systems include the application of plates, which are always fixed to the cover by means of screws, on which are then applied guides that house supports and anchoring devices for the panel structures.

Other systems provide for fixing tubes to the cover to which are fixed bearings on which plates are positioned to which are applied supports for the subsequent installation of the panels. In this case, the tubes are also engaged to the underlying structure by means of screws.

All of the previously illustrated systems, as well as many others in use, make use of a variety of guides, brackets, profiles, supports and the like, but the systems are all characterized by a single common denominator which is the perforation into metal slabs and other materials used for the cover.

The problem that renders the systems previously illustrated unreliable and ineffective over time is due to the many perforations that are made in the corrugated slabs of the cover for fixing the various support and anchoring systems of the panels. The high number of perforations causes water infiltration phenomena that are difficult to resolve and, over time, damage the underlying structures when such phenomena are not discovered in time.

In order to avoid water infiltration, the above-mentioned systems include the presence of gaskets that may be rubber, foam, neoprene or silicone-based but which, over time, are subject to breakage, cracking, splitting, and drying due to harsh winter temperatures and high summer temperatures. An example is given: during the summer with irradiation temperatures of 30-32°C, on a metal slab, the temperature can reach 65-75°C, with the result that elastomeric materials lose their sealing capacity as they soften greatly and, at the same time, dry out, thereby reducing their insulation function. In winter, however, with low temperatures the components harden to such an extent that they often crystallize, and with storms, winds or stresses they crack and crumble, leaving the fixing holes of the screws unprotected and not insulated. In addition, the changing of the seasons, the wind and rain lead to worn gaskets that begin to let moisture and water seep in that in a short time will cause considerable damage not only to the cover but also to the underlying structures.

In addition to what has been illustrated above, when a user decides to remove solar panels from the roof because they are not needed or because they need to be replaced because of damage, e.g., due to heavy hail, or because they have come to the end of their useful life, the roof cover must be completely rebuilt, given that it is full of perforations that cannot be used for a new plant or for new panels, as the screw that is inserted cannot clamp the structure adequately and thus cannot provide water tightness and stability to the structure and the plant.

These situations entail extremely expensive management and maintenance costs of a shed, as well as the fact that infiltrations are difficult to resolve without dismantling the plant that triggered them.

Among the various panel fixing methods, gasket rivet systems are also used, which however have shown low reliability and low safety because the rivets tend to move with stresses due to rain and wind in addition to temperature variations that lead to wearing down the gaskets and, consequently, to triggering water infiltration phenomena.

The previously illustrated systems, while delivering results, do not provide a guaranteed seal over time apart due to the fact that each panel plant provides for its own fixing system and the perforations in the cover can never be reused. An example of a bracket installed between two corrugated slabs is known from GB2462490 A, whereas an example of a profile installed between two corrugated slabs is known from DE 20 2008 007662 U.

As mentioned previously, ultimately, the need is highlighted for also installing other structures on the covers such as, for example, walkways or other installations, which may be temporary installations or installations used for short periods for maintenance, inspections or the like, for which the anchoring to the underlying structure must not puncture, and therefore damage, the cover slabs.

The object of the present invention is essentially to resolve the problems of the prior art by overcoming the aforementioned difficulties by means of a cover assembly comprising an anchoring bracket for covers that prevents the cover slabs from being perforated, and an anchoring method.

A second object of the present invention is to provide a cover assembly comprising an anchoring bracket for covers that may be used on both new and existing covers.

Another object of the present invention is to provide a cover assembly comprising an anchoring bracket for covers that is capable of adapting to any trapezoidal corrugated cover profile on the market.

Another object of the present invention is to provide a cover assembly comprising an anchoring bracket for covers with a limited footprint and that is easy and convenient to assemble and disassemble even by unskilled personnel without losing its functionality and practicality.

A further object of the present invention is the fact that it may provide a cover assembly comprising an anchoring bracket for covers which allows for high operational precision and considerable security in sealing against infiltration.

Lastly, the object of the present invention is to provide a cover assembly comprising an anchoring bracket for covers with a simple construction and good functionality.

These and still other objects, which will become more apparent in the present description, are substantially achieved by a cover assembly according to claim 1 and by an anchoring method according to claim 4.

Further features and advantages will become more apparent from the detailed description of a cover assembly comprising an anchoring bracket and an anchoring method according to the present invention provided below with reference to the accompanying drawings provided for solely indicative, and therefore non-limiting, purposes, wherein:
- figure 1 is a schematic and perspective view of an anchoring bracket for cover assemblies of the present invention;
- figure 2 shows schematically and in a different perspective view the bracket of figure 1;
- figure 3 shows schematically a method for fixing to a cover;
- figure 4 shows schematically another method for fixing the bracket of figure 1 to a cover;
- figure 5 shows schematically a variant of the anchoring bracket which does not form part of the invention;
- figure 6 shows schematically another method for fixing the bracket of figure 5 to a cover;
- figure 7 shows schematically another variant of the cover assembly according to the present invention and the relative method for anchoring the bracket to the cover slabs;
- figure 8 shows schematically a further variant of the anchoring bracket, which does not form part of the present invention and the related method for fixing it to the cover;
- figure 9 shows schematically another method for fixing the bracket of figure 8 to a cover, which does not form part of the present invention.

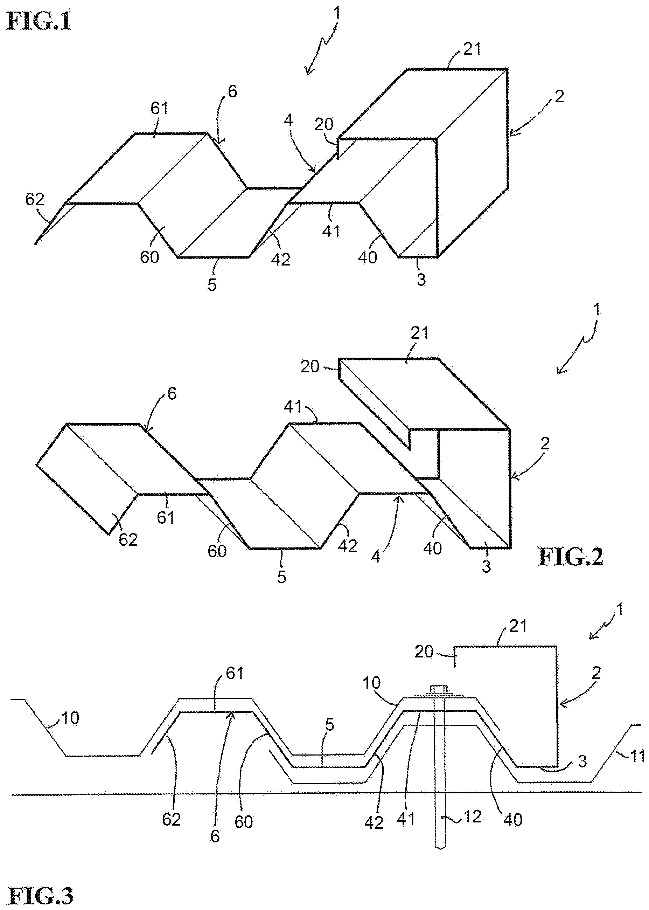

Referring to the figures cited above, and in particular to figure 1, an anchoring bracket for cover assemblies according to the present invention is indicated collectively at 1.

The anchoring bracket 1 is usable with any type of trapezoidal corrugated slab and is made with metallic profiles such as sheet metal or steel of different thicknesses according to the type of cover and the load that the bracket must support. Moreover, the bracket may be painted any color to adapt better aesthetically or to blend in with the cover or the installation that it must support.

The bracket 1 in question has a shaped profile wherein an L-shaped element 2 is provided which, in use, is an inverted L-shaped element having its free end with an orthogonally folded edge 20, as shown in figure 2, provided for making the bracket stiffer.

At the other end of the L, the bracket has a modeled sector so as to couple with the shape of the cover slab and engage with the same.

More specifically, in a first embodiment, the modeled sector of the bracket is composed of a portion 3 orthogonal to the long arm of the L, which continues with a shaped element 4 suitable to fit the contour of the cover. For a trapezoidal corrugated cover, the shaped element 4 has a trapezoidal profile with a first tilted portion 40, a second horizontal portion 41, perpendicular to the edge 20 and parallel to the portion 3, and a third tilted portion 42.

Moreover, in the present embodiment, the bracket 1 has a second portion 5 which leads away from the third portion 42 and is parallel to the portion 3 and from which a second shaped element 6 is detached, similar to the first element 4, which has a trapezoidal profile with a first tilted portion 60, a second horizontal portion 61 parallel to the second portion 41, and a third tilted portion 62, which is slightly shorter so that it does not touch the slab where it rests on the underlying structure.

As shown in figure 3, the first and second shaped elements 4 and 6 are intended to couple to a corrugated slab configuration used as a cover for an industrial-type shed.

In particular, the engagement of the bracket to a pair of slabs 10 and 11 occurs in the joining zone of the two and the bracket is inserted between the two slabs simply by inserting the bracket between the folds of the corrugated slab. The weight of the upper slab 10 is sufficient to hold the bracket in place also because the two slabs are secured to each other by means of screws, and the bracket may be fastened to the corrugated slab by means of at least one screw 12, which is none other than one of the screws that fastens the two slabs to each other, as shown in figure 3.

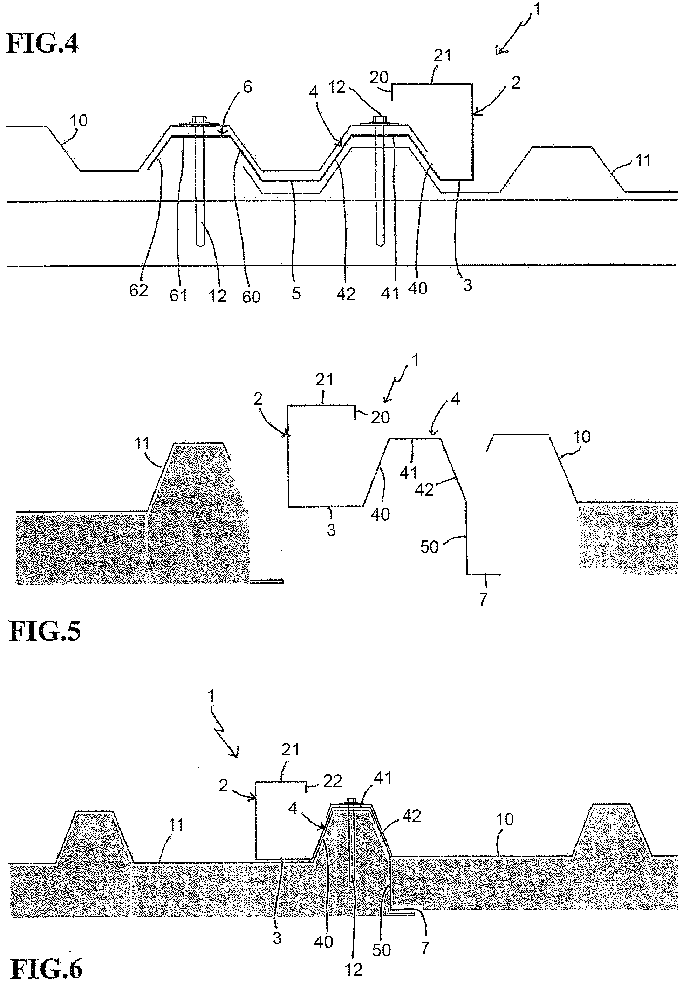

A variant of the bracket which does not form part of the present invention is shown in figure 5, wherein the bracket has an L-shaped element 2 with an orthogonally folded edge 20, a portion 3 orthogonal to the long arm of the L which continues with a shaped element 4 having a trapezoidal profile with a first tilted portion 40, a second horizontal portion 41 perpendicular to the edge 20 and parallel to the portion 3 and a third tilted portion 42. In particular, the bracket has a second portion 50 that leads away from the third portion 42 and is perpendicular to the portion 3 and from which is detached an end edge 7 orthogonal to the second portion 50.

The present variant is intended to be used in those covers that have a greater pitch between one fret and another as shown in figure 6. Also in this case, the bracket may simply be interposed between the two slabs in their overlapping area and held in place by means of the fixing screw 12 of the slabs themselves.

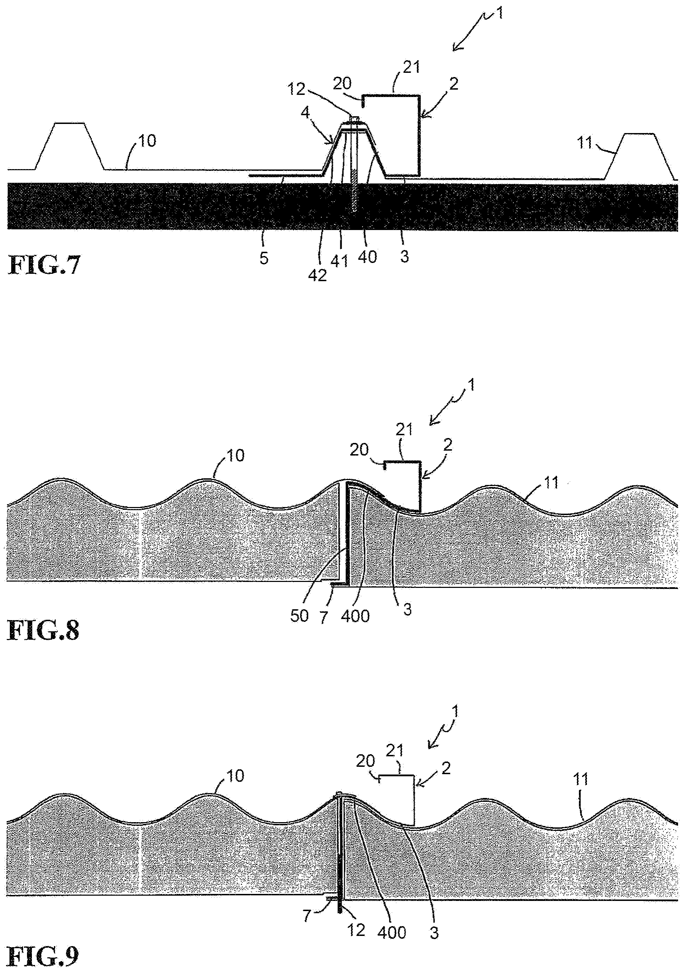

Another variant of the bracket in question provides only one shaped element, as shown in figure 7, whereby the bracket is substantially composed of a L-shaped element 2 including the folded edge 20, a portion 3, and a shaped element 4 with the portions 40, 41 and 42 and a second end portion 5. Also in this case, the bracket is placed in the overlapping area of the two corrugated slabs and is fixed by means of the screw 12 for fastening the two slabs together.

As previously illustrated, the cover slab is trapezoidal corrugated, but the bracket according to an embodiment that is not part of the present invention may also be used when the cover has a ondulated configuration, as shown in figure 8. In this case, the bracket always has the L-shaped element 2 with the folded edge 20 and the curvilinear portion 3 so that it may follow the ondulated profile of the cover slab. Moreover, the shaped element 400 is also curvilinear with a profile that resembles that of slabs 10 and 11. In this case, the shaped element 400 continues with a second portion 50 which is parallel to the long arm of the L ending with an end edge 7 orthogonal to the second portion 50.

Similar to the bracket versions illustrated above, the assembly - which does not form part of the present invention - takes place by interposition between two ondulated slabs and then may be secured by means of a screw 12 which is the same one which fastens the cover slabs together.

In addition to the foregoing, the end edge 7 has the task of abutting against the lower surface of the slab, so as to attach itself firmly to the structure of the slab itself and keep the two cover slabs and the interposed bracket engaged with each other.

According to the present invention, the short arm 21 of the L-shaped element constitutes a support and anchoring plate for any guide or fixing device of the panels or installation structures such as walkways, air conditioners or any other plant that must be installed on the cover.

The invention in question having been described in a predominantly structural sense, the operation thereof is as follows.

When installing e.g. solar panels on an industrial cover, one needs to simply insert the brackets at regular intervals between the slabs. The brackets will then be fastened by means of screws, and the anchoring devices of the panels fixed on the short arm 21 of the L of the bracket.

In this way, if the fixing screws of the panels lose their seal over time as the gaskets wear out, dry or crumble, infiltrating water will not pass under the cover, but remains on the outside ending up on the outer surface of the cover.

The present invention thus achieves the intended objects.

In fact, the covering assembly in question allows the cover slabs not to be perforated in addition to the holes provided for the joining and the fastening of the slabs, thereby avoiding all the problems to the underlying structure resulting from water infiltration and the deterioration of the slabs due to the perforation necessary for anchoring the panel support systems or other installations, as is the case with the operating procedures of the prior art.

Advantageously, the anchoring bracket may be used on both new and existing covers and is able to adapt to any trapezoidal corrugated cover profile on the market.

Another advantage of the bracket according to the present invention is that it has a limited footprint to be easily and conveniently assembled and disassembled even by unskilled personnel without losing its features of functionality and practicality and is able to be absolutely effective in function from the time of its installation.

In addition to that which is illustrated, the anchoring bracket offers high operational precision and considerable security for that which is anchored above it.

In particular, the structure of the bracket allows it to be shaped to conform to all types of trapezoidal corrugated profiles on the market.

A further advantage provided by the bracket in question is that it does not require periodic inspections and maintenance with considerable savings in the construction of covers, photovoltaic systems and other temporary and permanent installations that may be present on a cover.

Moreover, the bracket is extremely flexible and is easily movable to be able to modify the installations on the cover.

In addition to what has been said so far, the bracket in question is able to offer high positioning precision for an accurate and precise anchoring of the installations to be installed, and furthermore allows it to accommodate any kind of support condition unthinkable with the anchoring modes used in the prior art.

An additional advantage of the present bracket comes from the simple structure that avoids the use of all the complicated anchoring systems currently used.

The last advantage of the present invention is that it is remarkably easy to use, with its simple construction and good functionality.

Naturally, numerous modifications and variations may be made to the present invention, all within the scope of the inventive concept as defined in the appended claims.

## Claims

1. Cover assembly comprising a pair of cover slabs (10, 11) and an anchoring bracket (1), wherein the anchoring bracket (1) substantially consists of a shaped profile in which there is an L-shaped element (2) having at the free end an edge (20) folded orthogonally and at the other end a sector modeled in such a manner to couple with the shape of the pair of cover slabs (10, 11) and inserted between the two slabs by engaging with them, the extension of the anchoring bracket in the orthogonal direction to the plane formed by the edge (20) is greater than the width of the bracket extending in the longitudinal direction of said folded edge (20), said L-shaped element provides for the short arm (21) of the L constituting a resting and anchoring plate for any guide or fixing device of panels or installation structures such as walkways, air conditioners or any other plant that has to be installed on the cover,
wherein the modeled sector of the anchoring bracket comprises a portion (3) orthogonal to the long arm of the L that continues with a first shaped element (4) fitting the contour of a corrugated roof covering, the first shaped element (4) having a corrugated trapezoidal profile with a first tilted portion (40), a second horizontal portion (41), perpendicular to said folded edge (20) and parallel to said portion (3) orthogonal to the long arm of the L, and a third tilted portion (42),
and wherein the engagement of the anchoring bracket to the pair of cover slabs (10, 11) occurs in the joining zone of said pair of cover slabs (10, 11), the anchoring bracket being inserted between the pair of cover slabs (10, 11) simply by inserting the anchoring bracket between the folds of a corrugated slab of the corrugated roof covering, the weight of the upper slab (10) keeping the anchoring bracket stationary, said anchoring bracket being fastened to the pair of cover slabs (10, 11) by means of at least one fixing screw (12),
**characterized in that** the anchoring bracket (1) has a second portion (5) that leads away from the third tilted portion (42) of said first shaped element (4) and is parallel to said portion (3) orthogonal to the long arm of the L.

2. Cover assembly according to claim 1, wherein a second shaped element (6) extends from said second portion (5) and provides a trapezoidal profile with a first tilted portion (60), a second horizontal portion (61) parallel to the second horizontal portion (41) of said first shaped element (4) and a third portion (62) that is tilted, but slightly shorter in order not to touch the slab where it rests on the underlying structure.

3. Cover assembly according to claims 1 and 2, wherein the first shaped element (4) and the second shaped element (6) are provided for being able to couple with the configuration of a corrugated slab used as a cover in an industrial shed.

4. Anchoring method for anchoring a structure to a cover comprising corrugated slabs partially superimposed each other, comprising the steps of:
- providing a cover assembly according to any of the previous claims;
- inserting the anchoring bracket between the slabs' portions which are superimposed each other;
- anchoring the structure to the horizontal short arm of the "L-shaped" element of the anchoring bracket.

5. Anchoring method according to the previous claim, wherein the anchoring bracket is fixed to the partially superimposed slabs by means of a screw and of the holes already provided for the reciprocal joining of the slabs.

## Patentansprüche

1. Abdeckungsvorrichtung, umfassend ein Paar Abdeckplatten (10, 11) und ein Ankerbügel (1), wobei der Ankerbügel (1) im Wesentlichen aus einem geformten Profil besteht, in dem ein L-förmiges Element (2) vorhanden ist, das an seinem freien Ende ein Rand (20) aufweist, der orthogonal gebogen wird und an dem anderen Ende einen Abschnitt, der ausgebildet ist, sodass er mit der Gestalt des Paars von Abdeckplatten (10, 11) koppelbar ist und zwischen den beiden Platten durch Eingriff mit diesen eingeführt wird, wobei die Erstreckung des Ankerbügels in der orthogonalen Richtung zu der Ebene, die durch den Rand (20) gebildet wird, größer als die Breite des Bügels ist, der sich in der Längsrichtung des gebogenen Randes (20) erstreckt, wobei das L-förmige Element vorsieht, dass die kurze Seite (21) des L eine Auflage- und Ankerplatte für jede Führungs- oder Befestigungsvorrichtung von Tafeln oder Installationsstrukturen wie Laufstege, Klimaanlagen oder sonstige Anlagen bildet, die auf der Abdeckung installiert werden sollen,
wobei der ausgebildete Abschnitt des Ankerbügels einen Abschnitt (3) umfasst, der orthogonal zu der langen Seite des L ist und sich mit einem ersten geformten Element (4) fortsetzt, das sich an dem Umriss einer gewellten Dachabdeckung anpasst, wobei das erste geformte Element (4) ein trapezförmiges gewelltes Profil mit einem ersten geneigten Abschnitt (40), einem zweiten horizontalen Abschnitt (41), der sich senkrecht zu dem gebogenen Rand (20) und parallel zu dem Abschnitt (3) erstreckt, der sich orthogonal zu der langen Seite des L erstreckt und einem dritten geneigten Abschnitt (42) aufweist,
und wobei der Eingriff des Ankerbügels mit dem Paar von Abdeckplatten (10, 11) in einem Verbindungsbereich des Paars von Abdeckplatten (10, 11) erfolgt, wobei der Ankerbügel zwischen dem Paar von Abdeckplatten (10, 11) eingeführt wird, indem der Ankerbügel einfach zwischen den Faltungen einer gewellten Platte der gewellten Dachabdeckung eingeführt wird, wobei das Gewicht der oberen Platte (10) den Ankerbügel in Position hält, wobei der Ankerbügel mittels mindestens einer Befestigungsschraube (12) an dem Paar von Abdeckplatten (10, 11) befestigt wird,
**dadurch gekennzeichnet, dass** der Ankerbügel (1) einen zweiten Abschnitt (5) aufweist, der sich von dem dritten geneigten Abschnitt (42) des ersten geformten Elements (4) entfernt und sich parallel zu dem Abschnitt (3) erstreckt, der orthogonal zu der langen Seite des L ist.

2. Abdeckungsvorrichtung nach Anspruch 1, wobei sich ein zweites geformtes Element (6) von dem zweiten Abschnitt (5) erstreckt und ein trapezförmiges Profil mit einem ersten geneigten Abschnitt (60), einem zweiten horizontalen Abschnitt (61), der sich parallel zu dem zweiten horizontalen Abschnitt (41) des ersten geformten Elements (4) erstreckt, und einem dritten Abschnitt (62) aufweist, der geneigt ist, aber etwas kürzer ist, um die Platte nicht an der Stelle zu berühren, an der sie auf der darunterliegenden Struktur aufliegt.

3. Abdeckungsvorrichtung nach den Ansprüchen 1 und 2, wobei das erste geformte Element (4) und das zweite geformte Element (6) vorgesehen sind, sodass sie mit der Konfiguration einer gewellten Platte gekoppelt werden kann, die als Abdeckung in einer Industriehalle verwendet wird.

4. Ankerverfahren zum Verankern einer Struktur an einer Abdeckung umfassend gewellte Platten, die teilweise übereinanderliegen, umfassend die folgenden Schritte:
- Bereitstellen einer Abdeckungsvorrichtung nach einem der vorhergehenden Ansprüche;
- Einführen des Ankerbügels zwischen die Abschnitte der Platten, die teilweise übereinanderliegen;
- Verankern der Struktur an der horizontalen kurzen Seite des L-förmigen Elements des Ankerbügels.

5. Ankerverfahren nach dem vorhergehenden Anspruch, wobei der Ankerbügel an der teilweise übereinanderliegenden Platten mittels einer Schraube und der Bohrungen befestigt wird, die bereits für die gegenseitige Verbindung der Platten vorgesehen sind.

## Revendications

1. Ensemble de couverture comprenant une paire de dalles de couverture (10, 11) et un support d'ancrage (1), dans lequel le support d'ancrage (1) consiste essentiellement en un profilé façonné dans lequel se trouve un élément en L (2) ayant, à l'extrémité libre, un bord (20) plié orthogonalement et, à l'autre extrémité, un secteur modelé de manière à s'accoupler à la forme de la paire de dalles de couverture (10, 11) et inséré entre les deux dalles en venant s'y engager, l'extension du support d'ancrage dans la direction orthogonale au plan formé par le bord (20) étant supérieure à la largeur du support s'étendant dans la direction longitudinale dudit bord plié (20), ledit élément en L prévoyant que le bras court (21) du L constitue une plaque d'appui et d'ancrage pour tout guide ou dispositif de fixation de panneaux ou de structures d'installation telles que passerelles, climatiseurs ou tout autre équipement devant être installé sur la couverture,
dans lequel le secteur modelé du support d'ancrage comprend une portion (3) orthogonale au bras long du L qui se prolonge par un premier élément façonné (4) épousant le contour d'une couverture de toit ondulée, le premier élément façonné (4) présentant un profil ondulé trapézoïdal avec une première portion inclinée (40), une seconde portion horizontale (41), perpendiculaire audit bord plié (20) et parallèle à ladite portion (3) orthogonale au bras long du L, et une troisième portion inclinée (42),
et dans lequel l'engagement du support d'ancrage avec la paire de dalles de couverture (10, 11) se produit dans la zone de jonction de ladite paire de dalles de couverture (10, 11), le support d'ancrage étant inséré entre la paire de dalles de couverture (10, 11) simplement en introduisant le support d'ancrage entre les plis d'une dalle ondulée de la couverture de toit ondulée, le poids de la dalle supérieure (10) maintenant le support d'ancrage immobile, ledit support d'ancrage étant fixé à la paire de dalles de couverture (10, 11) au moyen d'au moins une vis de fixation (12),
**caractérisé en ce que** le support d'ancrage (1) présente une seconde portion (5) qui s'éloigne de la troisième portion inclinée (42) dudit premier élément façonné (4) et est parallèle à ladite portion (3) orthogonale au bras long du L.

2. Ensemble de couverture selon la revendication 1, dans lequel un second élément façonné (6) s'étend à partir de ladite seconde portion (5) et présente un profil trapézoïdal avec une première portion inclinée (60), une seconde portion horizontale (61) parallèle à la seconde portion horizontale (41) dudit premier élément façonné (4) et une troisième portion (62) qui est inclinée, mais légèrement plus courte afin de ne pas toucher la dalle à l'endroit où elle repose sur la structure sous-jacente.

3. Ensemble de couverture selon les revendications 1 et 2, dans lequel le premier élément façonné (4) et le second élément façonné (6) sont prévus pour pouvoir s'accoupler à la configuration d'une dalle ondulée utilisée comme couverture dans un hangar industriel.

4. Procédé d'ancrage pour ancrer une structure à une couverture comprenant des dalles ondulées partiellement superposées les unes aux autres, comprenant les étapes consistant à :
- prévoir un ensemble de couverture selon l'une quelconque des revendications précédentes ;
insérer le support d'ancrage entre les portions des dalles qui sont partiellement superposées ;
- ancrer la structure au bras horizontal court de l'élément en L du support d'ancrage.

5. Procédé d'ancrage selon la revendication précédente, dans lequel le support d'ancrage est fixé aux dalles partiellement superposées au moyen d'une vis et des trous déjà prévus pour la jonction réciproque des dalles.
